# FASCICULE DE BREVET EUROPEEN

(11) **EP 2 461 653 B1**
(45) Date de publication et mention de la délivrance du brevet: **05.06.2013**
(21) Numéro de dépôt: 11306448.9
(22) Date de dépôt: 08.11.2011
(51) Int. Cl.: H05B 39/04, H05B 39/08

(54) **Interface de commande de dispositifs variateurs de lumière et son procédé de commande**
Steuerschnittstelle von Lichtverstärkungsvorrichtungen, und ihr Steuerverfahren
Interface for controlling light dimmers and method for controlling same.

(30) Priorité: 01.12.2010 FR 1059969
(43) Date de publication de la demande: 06.06.2012
(73) Titulaire: Hager Controls SAS, 67700 Saverne (FR)
(72) Inventeur: Elsass, Marc, 67140 Barr (FR); Poisson, Christophe, 67700 Saverne (FR); Scheffer, Jérôme, 67120 Ergersheim (FR)
(74) Mandataire: Littolff, Denis

(56) Documents cités:
- EP-A1- 0 581 205
- DE-A1- 10 113 690
- US-A1- 2009 108 765

## Description

La présente invention a trait à une interface de commande d'un dispositif variateur de lumière pour luminaires, ladite interface comportant classiquement et d'office un mode usuel de commande auto-adaptatif, c'est-à-dire en principe apte à détecter automatiquement le type de charge lumineuse connecté en aval du dispositif variateur.

Le type et le nombre de charges lumineuses existant à ce jour sur le marché évoluent, et les variateurs de lumière conçus jusqu'ici, capables de détecter en substance des charges sensiblement inductives, capacitives ou résistives, ne suffisent plus à couvrir les besoins actuels. Ainsi, de nouvelles charges présentant souvent des caractéristiques de fonctionnement atypiques sont apparues, comme par exemple certains types d'ampoules à économie d'énergie, du type CFL (lampes fluo-compactes) ou à diodes électroluminescentes (LED). Celles-ci ne réagissent pas du tout de la même manière que les charges lumineuses plus anciennes, qui entrent peu ou prou dans le cadre des trois typologies de comportement tracé ci-dessus, et posent par conséquent des problèmes de détection, et de niveau de seuil à partir desquels il est possible de faire varier leur luminosité.

Le problème est d'importance, car le parc de luminaires en fonctionnement comporte de plus en plus de charges à économie d'énergie, les ampoules ou sources de lumière traditionnelles étant dans le même temps encore bien présentes. Il est d'ailleurs à signaler que les dernières évolutions techniques ne permettent pas de remplacer les lampes traditionnelles dans tous leurs domaines traditionnels d'utilisation.

Par ailleurs, ces nouvelles charges se caractérisent par des niveaux d'allumage ou de décrochage plus élevés que les charges lumineuses traditionnelles, et elles présentent des dynamiques de variation bien plus restreintes. Les dispositifs variateurs actuels, qui sont conçus pour s'adapter directement à la charge lors de la mise sous tension, en utilisant par exemple des procédés qui privilégient un démarrage en douceur supposé détecter lesdits niveaux d'allumage et de décrochage, ne sont pas adaptés aux nouvelles charges.

La détection devient soit trop longue, incompatible avec un fonctionnement raisonnable pour les utilisateurs, soit elle n'est tout simplement pas possible avec les logiciels de détection équipant les dispositifs existants.

Le problème qui se pose à l'heure actuelle est donc d'adapter le principe de détection de charge et le procédé de commande des variations des dispositifs variateurs de lumière à ces nouvelles charges. Secondairement, il convient d'éviter autant que possible, ou au moins d'atténuer les effets visibles découlant de l'usage de ces charges, en faisant notamment en sorte que la phase de détection / optimisation ne dure pas trop longtemps à chaque allumage de la lampe.

Le document US 2009/0108765 A1 montre un dispositif et un procédé selon les préambules respectifs des revendications 1 et 9.

La présente invention se propose de satisfaire à ces exigences, en garantissant notamment un fonctionnement automatique du couple variateur / charge et/ou, alternativement, en offrant des possibilités d'adaptation lors de changements de la charge lumineuse.

A cet effet, l'invention, qui est en fait une interface de commande de dispositif variateur de lumière, se caractérise à titre essentiel en ce qu'elle comporte, outre le mode usuel auto-adaptatif :
- un premier organe de commande de l'état de sortie du dispositif variateur et de sélection d'un mode de commande avancé et du mode de commande usuel ; et
- un second organe de commande et de sélection prévu pour actionner un mode expert neutralisant les modes précédents puis pour sélectionner un parmi plusieurs modes de fonctionnement et de commande correspondant à un type de charge ou aux deux modes de commande respectivement usuel et avancé.

En fait, l'idée est de proposer un produit universel pour lequel l'installateur doit pouvoir, en cas de nécessité, neutraliser les modes usuels ou avancés de commande. En fait, il doit être possible, pour l'installateur qui se trouve devant le tableau électrique ou devant le produit, d'avoir accès à tous les réglages et de pouvoir forcer si besoin tous les modes de fonctionnement et de commande.

Parmi les exigences requises, il faut bien entendu que cette nouvelle interface puisse être adaptée à différentes formes de produits, par exemple modulaires ou non modulaires.

Pour répondre aux standards de fonctionnement de tels variateurs de lumière, il convient ensuite que, en sus de la détection de nouvelles sources lumineuses comme des lampes fluo-compactes ou des lampes à diodes électro-luminescentes, le variateur de l'invention puisse détecter les niveaux minimums de commande entraînant un état stable de la lampe illuminée, au démarrage comme au décrochage.

Dans l'hypothèse où une telle détection prend trop de temps en mode usuel auto-adaptatif, l'utilisateur doit avoir la possibilité, dans le cadre de l'invention, de lancer facilement la détection en mode avancé, par manipulation de l'organe de commande du dispositif variateur.

Lorsque le fonctionnement n'est toujours pas satisfaisant, le mode expert est enclenché, comportant donc un second organe de commande effectuant une sélection parmi les modes de fonctionnement et de commande suivants :
- commande d'une charge lumineuse de type lampe fluo compacte (CFL) ;
- commande d'une charge lumineuse en mode coupure à l'angle ;
- commande d'une charge lumineuse en mode conduction à l'angle ;
- commande d'une charge lumineuse de type à diodes électroluminescentes (DEL) ;
- mode avancé ;
- mode de remise à zéro ou mode usuel.

Dans l'hypothèse de la mise en oeuvre du mode expert, visant comme indiqué à neutraliser les autres modes, il y a alors mise en oeuvre d'un fonctionnement discret résultant soit d'un choix de charge, incluant la sélection entre une charge résistive, inductive, capacitive, fluo-compacte, électro-luminescente, soit d'un choix de mode, incluant le mode avancé. L'organe de commande et de sélection spécifique au dispositif variateur de l'invention permet la sélection des différents modes de fonctionnement. Les charges du type transformateurs ferromagnétiques sont par ailleurs commandées en mode conduction à l'angle, alors que les transformateurs électroniques le sont en mode coupure à l'angle.

Le dispositif variateur comporte de préférence au moins un indicateur visuel restituant le mode de fonctionnement et de commande, et qui est associé au second organe de commande. De préférence, l'indicateur visuel peut être une diode LED dont la couleur est contrôlée, une couleur correspondant à un seul des différents modes de fonctionnement ou de contrôles. Ladite diode LED peut, selon l'invention, être commandée pour clignoter lorsque le second organe de commande est en phase de sélection, de façon à donner une double information : le mode dans lequel on se situe, et la possibilité d'en changer.

L'interface de l'invention est par ailleurs classiquement dotée de moyens de protection désactivant le fonctionnement en cas de blocage ou de surtension électrique susceptible de détruire l'interface de commande.

Selon une possibilité qui s'inscrit naturellement dans les habitudes techniques de conception de ce type de dispositifs, les organes de commande peuvent être des boutons-poussoirs.

En réalité, le premier et le second organes de commande peuvent être situés sur deux supports distincts, respectivement un bouton-poussoir et un variateur sous forme d'un appareil modulaire placé dans un tableau électrique, le premier pouvant être directement connecté à un luminaire ou à un groupe de luminaires, alors que le second est localisé au centre névralgique de l'installation électrique des locaux.

L'invention concerne également un procédé de commande de dispositif variateur de lumière comportant un mode usuel de commande auto-adaptatif, c'est-à-dire détectant automatiquement le type de charge lumineuse connectée en aval du dispositif variateur, ledit mode usuel étant mis en oeuvre dans le dispositif variateur par défaut. Ce procédé se caractérise à titre principal en ce qu'il comporte les étapes suivantes :
- allumage ou extinction de la ou des charges lumineuses du variateur et variation de leur luminosité par actionnement du premier organe de commande ;
- à défaut d'allumage correct de la charge lumineuse dans une période physiologiquement acceptable, basculement en mode avancé par une séquence de commande d'au moins une action, chacune pendant une durée prédéterminée, sur le premier organe de commande ;
- à défaut d'allumage correct de la charge lumineuse en mode avancé, commande de l'interface en mode expert par une séquence de commande d'au moins une action, chacune pendant une durée prédéterminée, sur le second organe de commande ; puis
- sélection, par une action sensiblement identique répétée ou une séquence d'actions sensiblement identique répétée n fois (n≥1) sur le second organe de commande, n correspondant à la totalité des modes de fonctionnement et de commande existants, validée par une séquence de commande d'au moins une action d'une durée prédéterminée sur le second organe de commande.

Selon une option possible, le contrôle du mode de fonctionnement et de commande en vigueur s'effectue d'ailleurs aussi par une séquence de commande d'au moins une action, chacune pendant une durée prédéterminée, sur le second organe de commande.

De préférence, et pour simplifier la gestion du procédé par l'interface de l'invention, les actions à effectuer sont de deux types seulement. Ainsi, la séquence de commande peut comporter au moins une action dite longue d'une durée d'au moins 10 s exercée sur un des organes de commande, et/ou comporter en outre au moins une action dite courte d'une durée comprise entre 50 ms et 500 ms.

L'association ou la combinaison d'actions longues et d'actions courtes offre évidemment de multiples possibilités, relativement facile à gérer pour le contrôleur de l'interface. Ainsi, par exemple :
- le basculement en mode avancé s'effectue par une action longue suivie d'une action courte sur le premier organe de commande ;
- le basculement en mode usuel s'effectue par une action longue suivie de deux actions courtes sur le premier organe de commande ;
- basculement en mode expert s'effectue par une action courte sur le second organe de commande ;
- la sélection du mode de fonctionnement ou de commande s'effectue par une succession d'actions courtes sur le second organe de commande, chaque action changeant le mode sélectionnable ;
- la validation du mode sélectionné s'effectue par une action longue sur le second organe de commande ; et
- le contrôle du mode de fonctionnement et de commande en vigueur s'effectue par une action courte sur le second organe de commande.

Dans la perspective tracée auparavant d'une interface dont le premier et le second organes de commande sont des boutons-poussoirs, les actions sont naturellement des pressions exercées sur lesdits boutons poussoirs.

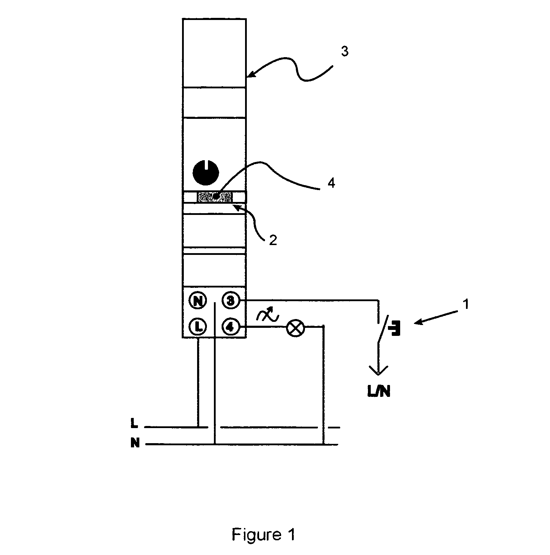

La figure 1 annexée montre un exemple de mise en oeuvre d'une interface de l'invention, dans une version selon laquelle les deux organes de commande ne sont pas localisés au même endroit.

Ainsi, le premier organe de commande (1), typiquement un bouton-poussoir situé quelque part dans les locaux, commande directement la marche et l'arrêt d'un ou plusieurs luminaires desdits locaux.

Le second organe de commande (2) est situé sur un variateur sous forme d'un appareil modulaire (3) placé sur un rail dans un coffret ou tableau d'installation électrique, et intègre une diode électroluminescente (4) qui change de couleur selon le mode de fonctionnement ou de commande.

Bien entendu, ces possibilités ne constituent que des exemples qui ne doivent pas être considérés comme limitatifs de l'invention. Celle-ci comporte des variantes, en termes de temps d'action, de nombres d'actions sur les organes de commande, d'intégration à une installation électrique, etc.

## Revendications

1. Interface de commande de dispositifs variateurs de lumière comportant un mode usuel de commande auto-adaptatif mis en oeuvre par défaut, détectant automatiquement le type de charge lumineuse connectée en aval du dispositif variateur, **caractérisée en ce qu'**elle comporte :
- un premier organe de commande de l'état de sortie du dispositif variateur et de sélection d'un mode de commande avancé et du mode de commande usuel ; et
- un second organe de commande et de sélection prévu pour actionner un mode expert neutralisant les modes précédents puis pour sélectionner un parmi plusieurs modes de fonctionnement et de commande correspondant à un type de charge ou aux deux modes de commande respectivement usuel et avancé.

2. Interface de commande selon la revendication précédente, **caractérisée en ce que** le second organe de commande effectue une sélection parmi les modes de fonctionnement et de commande suivants :
- commande d'une charge lumineuse de type lampe fluo compacte (CFL) ;
- commande d'une charge lumineuse en mode coupure à l'angle ;
- commande d'une charge lumineuse en mode conduction à l'angle ;
- commande d'une charge lumineuse de type à diodes électroluminescentes (DEL) ;
- mode avancé ;
- mode de remise à zéro ou mode usuel.

3. Interface de commande selon l'une des revendications précédentes, **caractérisée en ce qu'**au au moins un indicateur visuel restituant le mode de fonctionnement et de commande est associé au second organe de commande.

4. Interface de commande selon la revendication précédente, **caractérisée en ce que** l'indicateur visuel est une diode LED dont la couleur est contrôlée, une couleur correspondant à un seul des différents modes de fonctionnement ou de contrôle.

5. Interface de commande selon l'une des revendications précédentes, **caractérisée en ce que** la diode LED est commandée pour clignoter lorsque le second organe de commande est en phase de sélection.

6. Interface de commande selon l'une des revendications précédentes, **caractérisée en ce qu'**elle est dotée de moyens de protection désactivant le fonctionnement en cas de blocage ou de surtension électrique susceptible de détruire l'interface de commande.

7. Interface de commande selon la revendication précédente, **caractérisée en ce que** les organes de commande sont des boutons-poussoirs.

8. Interface de commande selon l'une quelconque des revendications précédentes, **caractérisée en ce que** le premier et le second organes de commande sont situés sur deux supports distincts, respectivement un bouton-poussoir et un variateur sous forme d'un appareil modulaire placé dans un tableau électrique.

9. Procédé de commande de dispositifs variateurs de lumière comportant un mode usuel de commande auto-adaptatif, détectant automatiquement le type de charge lumineuse connectée en aval du dispositif variateur et mis en oeuvre par défaut, **caractérisé en ce qu'**il comporte les étapes suivantes :
- allumage ou extinction de la ou des charges lumineuses du variateur et variation de leur luminosité par actionnement du premier organe de commande ;
- à défaut d'allumage correct de la charge lumineuse dans une période physiologiquement acceptable, basculement en mode avancé par une séquence de commande d'au moins une action, chacune pendant une durée prédéterminée, sur le premier organe de commande ;
- à défaut d'allumage correct de la charge lumineuse en mode avancé, commande de l'interface en mode expert par une séquence de commande d'au moins une action, chacune pendant une durée prédéterminée, sur le second organe de commande ; puis
- sélection, par une action sensiblement identique répétée ou une séquence d'actions sensiblement identique répétée n fois (n≥1) sur le second organe de commande, n correspondant à la totalité des modes de fonctionnement et de commande existants, validée par une séquence de commande d'au moins une action d'une durée prédéterminée sur le second organe de commande.

10. Procédé de commande de dispositifs variateurs de lumière selon la revendication précédente, **caractérisé en ce que** le contrôle du mode de fonctionnement et de commande en vigueur s'effectue par une séquence de commande d'au moins une action, chacune pendant une durée prédéterminée, sur le second organe de commande.

11. Procédé de commande de dispositifs variateurs de lumière selon la revendication précédente, **caractérisé en ce que** la séquence de commande comporte au moins une action dite longue d'une durée d'au moins 10 s exercée sur un des organes de commande.

12. Procédé de commande de dispositifs variateurs de lumière selon la revendication précédente, **caractérisé en ce que** la séquence de commande comporte au moins une action dite courte d'une durée comprise entre 50 ms et 500 ms.

13. Procédé de commande de dispositifs variateurs de lumière selon la revendication précédente, **caractérisé en ce que** le basculement en mode avancé s'effectue par une action longue suivie d'une action courte sur le premier organe de commande.

14. Procédé de commande de dispositifs variateurs de lumière selon la revendication précédente, **caractérisé en ce que** le basculement en mode usuel s'effectue par une action longue suivie de deux actions courtes sur le premier organe de commande.

15. Procédé de commande de dispositifs variateurs de lumière selon l'une des revendications 9 à 14 précédentes, **caractérisé en ce que** le basculement en mode expert s'effectue par une action courte sur le second organe de commande.

16. Procédé de commande de dispositifs variateurs de lumière selon la revendication précédente, **caractérisé en ce que** la sélection du mode de fonctionnement ou de commande s'effectue par une succession d'actions courtes, chaque action changeant le mode sélectionnable.

17. Procédé de commande de dispositifs variateurs de lumière selon l'une des revendications 15 et 16, **caractérisé en ce que** la validation du mode sélectionné s'effectue par une action longue sur le second organe de commande.

18. Procédé de commande de dispositifs variateurs de lumière selon la revendication précédente, **caractérisé en ce que** le contrôle du mode de fonctionnement et de commande en vigueur s'effectue par une action courte sur le second organe de commande.

19. Procédé de commande de dispositifs variateurs de lumière selon l'une des revendications 9 à 18, **caractérisé en ce que** les actions sont des pressions exercées sur un bouton-poussoir.

## Patentansprüche

1. Steuerschnittstelle von Lichtreglervorrichtungen, die einen gängigen selbstanpassenden Steuermodus aufweist, der standardmäßig umgesetzt wird, die automatisch den Typ der nach der Reglervorrichtung gekoppelten Lichtlast erkennt, **dadurch gekennzeichnet, dass** sie umfasst:
- ein erstes Steuerorgan des Ausgangszustands der Regler- und Auswahlvorrichtung eines fortgeschrittenen Steuermodus und des gängigen Steuermodus, und
- ein zweites Steuer- und Auswahlorgan, das vorgesehen ist, um einen Expertenmodus zu betätigen, der die vorhergehenden Modi neutralisiert, um dann einen von mehreren Betriebs- und Steuermodi auszuwählen, der einem Lampentyp entspricht oder den jeweiligen zwei gängigen und fortgeschrittenen Steuermodi.

2. Steuerschnittstelle nach vorangehendem Anspruch, **dadurch gekennzeichnet, dass** das zweite Steuerorgan eine Auswahl zwischen den folgenden Betriebs- und Steuermodi durchführt:
- Steuerung einer Lichtlast vom Typ Kompaktleuchtstofflampe (CFL),
- Steuerung einer Lichtlast im Modus Phasenabschnitt,
- Steuerung einer Lichtlast im Modus Phasenanschnitt,
- Steuerung einer Lichtlast vom Typ mit elektrolumineszierenden Dioden (DEL),
- fortgeschrittener Modus,
- Nullstellmodus oder üblicher Modus.

3. Steuerschnittstelle nach einem der vorangehenden Ansprüche, **dadurch gekennzeichnet, dass** dem zweiten Steuerorgan mindestens eine visuelle Anzeige, die den Betriebs- und Steuermodus wiedergibt, zugeordnet ist.

4. Steuerschnittstelle nach vorangehendem Anspruch, **dadurch gekennzeichnet, dass** die visuelle Anzeige eine LED-Diode ist, deren Farbe kontrolliert ist, wobei eine Farbe einem einzigen der verschiedenen Betriebs- oder Kontrollmodi entspricht.

5. Steuerschnittstelle nach einem der vorangehenden Ansprüche, **dadurch gekennzeichnet, dass** die LED-Diode gesteuert ist, um zu blinken, wenn das zweite Steuerorgan in Auswahlphase ist.

6. Steuerschnittstelle nach einem der vorangehenden Ansprüche, **dadurch gekennzeichnet, dass** sie mit Schutzmitteln ausgestattet ist, die den Betrieb bei Blockade oder elektrischer Überspannung, die die Steuerschnittstelle beschädigen könnten, deaktivieren.

7. Steuerschnittstelle nach vorangehendem Anspruch, **dadurch gekennzeichnet, dass** die Steuerorgane Druckknöpfe sind.

8. Steuerschnittstelle nach einem der vorangehenden Ansprüche, **dadurch gekennzeichnet, dass** sich das erste und das zweite Steuerorgan auf zwei unterschiedlichen Haltern, jeweils einem Druckknopf und einem Regler in Form eines modularen Geräts, das in einer elektrischen Tafel platziert ist, befinden.

9. Steuerverfahren von Lichtreglervorrichtungen, das einen gängigen selbstanpassenden Steuermodus aufweist, der automatisch den Typ der nach der Reglervorrichtung gekoppelten Lichtlast erkennt und standardmäßig umgesetzt wird, **dadurch gekennzeichnet, dass** es die folgenden Schritte umfasst:
- Einschalten oder Ausschalten der Lichtlast(en) des Reglers und Regelung ihrer Lichtstärke durch Betätigung des ersten Steuerorgans,
- standardmäßig korrektes Einschalten der Lichtlast in einem physiologisch akzeptablen Zeitraum, Schalten in den fortgeschrittenen Modus durch eine Steuersequenz mindestens einer Aktion, jeweils während einer vorbestimmten Dauer, auf das erste Steuerorgan,
- standardmäßig korrektes Einschalten der Lichtlast im fortgeschrittenen Modus, Steuerung der Schnittstelle im Expertenmodus durch eine Steuersequenz mindestens einer Aktion, jeweils während einer vorbestimmten Dauer, auf das zweite Steuerorgan, dann
- Auswahl anhand einer etwa identischen wiederholten Aktion oder einer Sequenz etwa identischer Aktionen mit n-maliger Wiederholung (n≥1) auf das zweite Steuerorgan, wobei n der Gesamtheit der vorhandenen Betriebs- und Steuerarten entspricht, die durch eine Steuersequenz mindestens einer Aktion einer vorbestimmten Dauer auf das zweite Steuerorgan bestätigt wird.

10. Steuerverfahren von Lichtreglervorrichtungen nach vorangehendem Anspruch, **dadurch gekennzeichnet, dass** die Kontrolle des geltenden Betriebs- und Steuermodus durch eine Steuersequenz mindestens einer Aktion stattfindet, jeweils während einer vorbestimmten Dauer, auf das zweite Steuerorgan.

11. Steuerverfahren von Lichtreglervorrichtungen nach vorangehendem Anspruch, **dadurch gekennzeichnet, dass** die Steuersequenz mindestens eine lange Aktion einer Dauer von mindestens 10 Sekunden aufweist, die auf eines der Steuerorgane ausgeübt wird.

12. Steuerverfahren von Lichtreglervorrichtungen nach vorangehendem Anspruch, **dadurch gekennzeichnet, dass** die Steuersequenz mindestens eine kurze Aktion einer Dauer zwischen 50 ms und 500 ms inklusive aufweist.

13. Steuerverfahren von Lichtreglervorrichtungen nach vorangehendem Anspruch, **dadurch gekennzeichnet, dass** das Schalten in den fortgeschrittenen Modus durch eine lange Aktion, gefolgt von einer kurzen Aktion, auf das erste Steuerorgan erfolgt.

14. Steuerverfahren von Lichtreglervorrichtungen nach vorangehendem Anspruch, **dadurch gekennzeichnet, dass** das Schalten in den gängigen Modus durch eine lange Aktion, gefolgt von zwei kurzen Aktionen, auf das erste Steuerorgan erfolgt.

15. Steuerverfahren von Lichtreglervorrichtungen nach einem der vorangehenden Ansprüche 9 bis 14, **dadurch gekennzeichnet, dass** das Schalten in den Expertenmodus durch eine kurze Aktion auf das zweite Steuerorgan erfolgt.

16. Steuerverfahren von Lichtreglervorrichtungen nach vorangehendem Anspruch, **dadurch gekennzeichnet, dass** die Auswahl des Betriebs- oder Steuermodus durch eine Abfolge kurzer Aktionen erfolgt, wobei jede Aktion den auswählbaren Modus ändert.

17. Steuerverfahren von Lichtreglervorrichtungen nach einem der Ansprüche 15 und 16, **dadurch gekennzeichnet, dass** die Bestätigung des ausgewählten Modus durch eine lange Aktion auf das zweite Steuerorgan erfolgt.

18. Steuerverfahren von Lichtreglervorrichtungen nach vorangehendem Anspruch, **dadurch gekennzeichnet, dass** die Kontrolle des geltenden Betriebs- und Steuermodus durch eine kurze Aktion auf das zweite Steuerorgan erfolgt.

19. Steuerverfahren von Lichtreglervorrichtungen nach einem der Ansprüche 9 bis 18, **dadurch gekennzeichnet, dass** die Aktionen Drücke sind, die auf einen Druckknopf ausgeübt werden.

## Claims

1. A control interface for light dimmer devices including a standard self-adapting control mode implemented by default, automatically detecting the type of lighting load connected downstream from the dimmer device, **characterized in that** it includes:
- a first control member controlling the output state of the dimmer device and selecting an advanced control mode and the standard control mode; and
- a second control and selection member provided to actuate an expert mode neutralizing the aforementioned modes, then selecting one from among several operating and control modes corresponding to a type of load or to the two usual and advanced control modes, respectively.

2. The control interface according to the preceding claim, **characterized in that** the second control member makes a selection from among the following operating and control modes:
- control of a lighting load of the compact fluorescent lamp (CFL) type;
- control of a lighting load in angle cut off mode;
- control of a lighting load in angle conduction mode;
- control of a lighting load of the light emitting diode (LED) type;
- advanced mode;
- reset mode or standard mode.

3. The control interface according to one of the preceding claims, **characterized in that** at least one visual indicator displaying the operating and control mode is associated with the second control member.

4. The control interface according to the preceding claim, **characterized in that** the visual indicator is an LED whereof the color is controlled, a color corresponding to only one of the different operating or control modes.

5. The control interface according to one of the preceding claims, **characterized in that** the LED is commanded to blink when the second control member is in the selection phase.

6. The control interface according to one of the preceding claims, **characterized in that** it is equipped with protection means deactivating operation in the event of blockage or overvoltage capable of destroying the control interface.

7. The control interface according to the preceding claim, **characterized in that** the control members are pushbuttons.

8. The control interface according to any one of the preceding claims, **characterized in that** the first and second control members are situated on two separate supports, respectively a pushbutton and a dimmer in the form of a configurable device placed on an electric board.

9. A method for controlling light dimmer devices including a standard self-adapting control mode, automatically detecting the type of lighting load connected downstream from the dimmer device and implemented by default, **characterized in that** it includes the following steps:
- lighting or extinguishing the lighting load(s) of the dimmer and varying their brightness by actuating the first control member;
- in the event of incorrect lighting of each lighting load over a physiologically acceptable period, switching to advanced mode through a command sequence of at least one action, each during a predetermined length of time, on the first control member;
- in the event of incorrect lighting of the lighting load in advanced mode, commanding the interface in expert mode through a command sequence of at least one action, each for predetermined length of time, on the second control member; then
- selecting, through a substantially identical repeated action or a substantially identical repeated series of actions, n times (n≥1) on the second control member, n corresponding to all of the existing operating and control modes, validated by a control sequence, at least one action of a predetermined duration on the second control member.

10. The method for controlling light dimmer devices according to the preceding claim, **characterized in that** the control of the operating and control mode in force is done through a command sequence of at least one action, each for a predetermined length of time, on the second control member.

11. The method for controlling light dimmer devices according to the preceding claims, **characterized in that** the command sequence includes at least one so-called long action lasting at least 10 s exerted on one of the control members.

12. The method for controlling light dimmer devices according to the preceding claim, **characterized in that** the command sequence includes at least one so-called short action lasting between 50 ms and 500 ms.

13. The method for controlling light dimmer devices according to the preceding claim, **characterized in that** the switch to advanced mode is done by a long action followed by a short action on the first control member.

14. The method for controlling light dimmer devices according to the preceding claim, **characterized in that** the switch to standard mode is done by a long action followed by two short actions on the first control member.

15. The method for controlling light dimmer devices according to one of the preceding claims 9 to 14, **characterized in that** the switch to expert mode is done by a short action on the second control member.

16. The method for controlling light dimmer devices according to the preceding claim, **characterized in that** the selection of the operating or control mode is done by a series of short actions, each action changing the selectable mode.

17. The method for controlling light dimmer devices according to one of claims 15 and 16, **characterized in that** the validation of the selected mode is done by a long action on the second control member.

18. The method for controlling light dimmer devices according to the preceding claim, **characterized in that** the verification of the operating and control mode in force is done by a short action on the second control member.

19. The method for controlling light dimmer devices according to one of claims 9 to 18, **characterized in that** the actions are pressures exerted on a pushbutton.
